# EUROPÄISCHE PATENTSCHRIFT

(11) **EP 3 864 446 B1**
(45) Veröffentlichungstag und Bekanntmachung des Hinweises auf die Patenterteilung: **10.08.2022**
(21) Anmeldenummer: 19786520.7
(22) Anmeldetag: 07.10.2019
(51) Int. Cl.: G02B 5/20, G02B 21/00

(54) **BANDPASSFILTER FÜR LICHT MIT VARIABLER UNTERER UND OBERER GRENZWELLENLÄNGE**
BANDPASS FILTER FOR LIGHT HAVING VARIABLE LOWER AND UPPER CUT-OFF WAVELENGTHS
FILTRE PASSE-BANDE POUR DE LA LUMIÈRE PRÉSENTANT UNE LONGUEUR D'ONDE LIMITE INFÉRIEURE ET SUPÉRIEURE VARIABLE

(30) Priorität: 08.10.2018 DE 102018124714
(43) Veröffentlichungstag der Anmeldung: 18.08.2021
(73) Patentinhaber: Abberior Instruments GmbH, 37077 Göttingen (DE)
(72) Erfinder: FISCHER, Joachim, 76228 Karlsruhe (DE); HENRICH, Matthias, 69115 Heidelberg (DE); SCHÖNLE, Andreas, 37085 Göttingen (DE); KASTRUP, Lars, 37073 Göttingen (DE)
(74) Vertreter: REHBERG HÜPPE + PARTNER
(86) Internationale Anmeldenummer: PCT/EP2019/077013
(87) Internationale Veröffentlichungsnummer: WO 2020/074409

(56) Entgegenhaltungen:
- EP-A1- 3 333 611
- DE-A1-102006 034 908
- DE-U1-202016 008 334
- US-A- 5 969 868
- US-A1- 2014 312 212

## Beschreibung

### TECHNISCHES GEBIET DER ERFINDUNG

Die vorliegende Erfindung bezieht sich auf ein für Licht vorgesehenes Bandpassfilter mit einer variablen unteren Grenzwellenlänge, die durch ein flächiges Langpassfilter vorgegeben wird, wobei das Langpassfilter in verschiedenen Flächenbereichen, die in einer ersten Richtung aufeinander folgen, verschiedene untere Grenzwellenlängen aufweist, und mit einer variablen oberen Grenzwellenlänge, die durch ein flächiges Kurzpassfilter vorgeben wird, wobei das Kurzpassfilter in verschiedenen Flächenbereichen, die in einer zweiten Richtung aufeinander folgen, verschiedene obere Grenzwellenlängen aufweist, wobei das Langpassfilter und das Kurzpassfilter in Reihe geschaltet sind. Weiterhin bezieht sich die Erfindung auf Vorrichtungen zum Selektieren eines Wellenlängenbereichs aus einem Lichtstrahl mit einem solchen Bandpassfilter.

Die Selektion eines Wellenlängenbereichs aus einem Lichtstrahl kann beispielsweise dazu dienen, einen bestimmten Wellenlängenbereich aus einem bezüglich der enthaltenen Wellenlängen breitbandigeren Lichtstrahl auszuwählen, beispielsweise als Anregungslicht für einen Farbstoff in der Laser-Scanning-Mikroskopie. Eine andere Anwendung einer solchen Vorrichtung besteht darin, Lichtintensitäten eines Lichtstrahls wellenlängenselektiv zu erfassen, also beispielsweise nur die Lichtintensitäten in einem selektierten Wellenlängenbereich oder die Verteilung der Lichtintensitäten über verschiedene Wellenlängenbereiche. Auch dies kann in der Laser-Scanning-Mikroskopie erfolgen, und zwar im Detektionsstrahlengang für von dem jeweiligen Farbstoff emittiertes Fluoreszenzlicht.

### STAND DER TECHNIK

Aus der DE 10 2006 034 908 A1 ist ein Strahlteiler zum Einsatz im Detektionsstrahlengang eines Laser-Scanning-Mikroskops bekannt, der aus einem im Strahlengang verschieblichen Verlaufsfilter zur einstellbaren wellenlängenabhängigen Aufspaltung von Detektionslicht in einen transmittierten und einen reflektierten Anteil besteht. Das Verlaufsfilter weist eine kontinuierliche räumliche Veränderung der Grenzwellenlänge zwischen dem reflektierten und dem transmittierten Anteil des Detektionslichts auf und kann als Kurzpass-, Langpass- oder Bandpassfilter ausgeführt sein. Der reflektierte und der transmittierte Anteil des Lichtstrahls werden von zwei getrennten Detektoren gemessen.

Aus der DE 10 2009 012 874 A1 ist ein Laser-Scanning-Mikroskop mit einem Detektionsstrahlengang zur Detektion von Spektralanteilen von in einer Probe angeregter Lichtstrahlung mit mehreren Detektionskanälen bekannt. Die Lichtstrahlung gelangt auf einen variablen Lang- oder Kurzpassfilter. Der Lang- oder Kurzpassfilter ist ein variabler Kantenfilter, der entlang seiner Längsausdehnung eine unterschiedliche Aufteilung in transmittierte und reflektierte Wellenlängenanteile aufweist. Von dem Lang- oder Kurzpassfilter reflektierte und/oder transmittierte Anteile der Lichtstrahlung werden jeweils von einem Reflektor parallelversetzt auf den Lang- oder Kurzpassfilter hin zurückgespiegelt und von diesem erneut reflektiert oder transmittiert, bevor sie dann auf einen von insgesamt vier Detektoren gelangen. Zwei der vier Detektoren messen dann Anteile der Lichtstrahlung, die einmal durch den Lang- oder Kurzpassfilter reflektiert und einmal transmittiert wurden und die so in einen nach oben und unten begrenzten Wellenlängenbereich fallen. Hingegen messen die beiden anderen Detektoren Anteile der Lichtstrahlung, die zweimal transmittiert bzw. zweimal reflektiert wurden und so bezüglich ihrer Wellenlänge nur einseitig begrenzt sind.

Aus der DE 10 2010 060 747 B4 ist ein konfokales Laser-Scanning-Mikroskop mit mindestens zwei Detektoreinheiten bekannt, die durch eine Detektionslochblende hindurchtretendes Detektionslicht detektieren. Ein optisches Element, das das Detektionslicht in mindestens zwei Strahlbündel trennt und innerhalb der Strahlbündel spektral aufspaltet, ist in Strahlrichtung zwischen der Detektionslochblende und den Detektoreinheiten angeordnet. Das optische Element umfasst eine Prismenanordnung. Ein Wellenlängenbereich der Strahlbündel wird vor der Detektion mit Hilfe eines spektral begrenzenden Elements begrenzt, wobei dieses spektral begrenzende Element zum Variieren der detektierten Wellenlängen verschiebbar und/oder verdrehbar angeordnet ist. Das optische Element kann das Detektionslichtbündel zudem in drei oder mehr Strahlbündel trennen und innerhalb der Strahlbündel spektral aufspalten.

Beispielsweise aus der DE 20 2016 008 334 U1 ist es bekannt, einen Lichtstrahl spektral aufzutrennen, indem er nacheinander auf mehrere, an verschiedenen optischen Elementen ausgebildeten dichroitische Grenzflächen mit unterschiedlichen Grenzwellenlängen zwischen Transmission und Reflexion gerichtet wird.

Aus der DE 100 38 049 A1 ist eine optische Anordnung zur Selektion und Detektion des Spektralbereichs eines Lichtstrahls in einem konfokalen Rastermikroskop bekannt. Die optische Anordnung weist Mittel zur spektralen Zerlegung des Lichtstrahls, Mittel zum Selektieren eines vorgebbaren spektralen Bereichs und eine Detektionsvorrichtung auf. Zur Beeinflussung des zu detektierenden spektralen Bereichs sind der spektralzerlegte Lichtstrahl und die Detektionsvorrichtung relativ zueinander in ihrer Position veränderbar. Daher reicht es aus, wenn die Detektionsvorrichtung nur einen Detektor umfasst. Konkret kann die relative Positionsänderung zwischen dem spektralzerlegten Lichtstrahl und der Detektionsvorrichtung durch Drehen und/oder Verschieben eines Spiegels erfolgen, der vor den Mitteln zur spektralen Zerlegung angeordnet ist. Als die Mittel zur spektralen Zerlegung kann ein Prisma, ein Reflexions- oder ein Transmissionsgitter dienen.

Aus der US 4 225 233 A ist ein Spektrometer zum Bereitstellen von ausgegebenem Licht mit einer vorgegebenen Wellenlänge bekannt, bei dem die Wellenlänge mit Hilfe eines Scanelements vorgegeben wird. Das Scanelement ist ein kleiner Kippspiegel in einem Bild eines reflektierenden Gitters des Spektrometers, dessen Winkelstellung verändert wird. Das von dem Spiegel reflektierte Licht wird durch eine Schlitzblende hindurchgeführt, um das Ausgabelicht mit der vorgegebenen Wellenlänge bereitzustellen. Durch Verändern der Winkelstellung des Spiegels mit einem Galvanometer kann das Spektrum eines auf das Gitter einfallenden Lichtstrahls abgetastet werden.

Aus Sutter Instrument Co., "Lambda DG-4 and Lambda DG-5 Ultra-High-Speed Wavelength Switching Illumination System Operation Manual", Rev. 3.05B, Novato, CA, USA (09.10.2013), URL: https://www.sutter.com/manuals/LBDG-4_5_OpMan.pdf ist eine Vorrichtung mit zwei einachsigen Kippspiegeln in Form von Galvanometerscannerspiegeln und einem Interferenzfilter zur Wellenlängenselektion bekannt. Licht von einer Xenon-Bogenlampe wird auf den ersten Galvanometerscannerspiegel fokussiert, der das Licht über einen Parabolspiegel auf einen von mehreren Filterkanälen des Interferenzfilters lenkt. Hinter dem Interferenzfilter ist ein zweiter Parabolspiegel angeordnet, der das transmittierte Licht unabhängig von der Umlenkung durch den ersten Galvanometerscannerspiegel in einen ortsfesten Brennpunkt auf dem zweiten Galvanometerscanner fokussiert. Der zweite Galvanometerscanner richtet das Licht mit der durch das Interferenzfilter selektierten Wellenlänge in einen Lichtleiter. Das Interferenzfilter weist verschiedene Oberflächenbereiche auf, in denen es unterschiedliche Wellenlängen selektiert und auf die das Licht mit dem ersten Galvanometerscannerspiegel ausrichtbar ist.

Ein Bandpassfilter mit den Merkmalen des Oberbegriffs des Patentanspruchs 1 ist aus der EP 3 333 611 A1 bekannt.

### AUFGABE DER ERFINDUNG

Der Erfindung liegt die Aufgabe zugrunde, ein Bandpassfilter für Licht aufzuzeigen, mit dem in einfacher Weise ein zu selektierender Wellenlängenbereich nach seiner Lage und seiner Bandbreite festlegbar ist.

### LÖSUNG

Die Aufgabe der Erfindung wird mit einem Bandpassfilter mit den Merkmalen des unabhängigen Patentanspruchs 1 gelöst. Die abhängigen Patentansprüche 2 bis 8 betreffen bevorzugte Ausführungsformen des erfindungsgemäßen Bandpassfilters. Die abhängigen Patentansprüche 9 bis 14 sind auf Vorrichtungen zum Selektieren eines Wellenlängenbereichs aus einem Lichtstrahl mit einem erfindungsgemäßen Bandpassfilter gerichtet. Patentanspruch 15 betrifft ein Laser-Scanning-Mikroskop mit mindestens einer solchen Vorrichtung.

### BESCHREIBUNG DER ERFINDUNG

Bei einem erfindungsgemäßen für Licht vorgesehenen Bandpassfilter mit einer variablen unteren Grenzwellenlänge, die durch ein flächiges Langpassfilter vorgegeben wird, wobei das Langpassfilter in verschiedenen Flächenbereichen, die in einer ersten Richtung aufeinander folgen, verschiedene untere Grenzwellenlängen aufweist, und mit einer variablen oberen Grenzwellenlänge, die durch ein flächiges Kurzpassfilter vorgegeben wird, wobei das Kurzpassfilter in verschiedenen Flächenbereichen, die in einer zweiten Richtung aufeinander folgen, verschiedene obere Grenzwellenlängen aufweist, wobei das Langpassfilter und das Kurzpassfilter in Reihe geschaltet sind, sind das Langpassfilter und das Kurzpassfilter räumlich fest zueinander angeordnet und sind die erste Richtung und die zweite Richtung quer zueinander ausgerichtet.

Das erfindungsgemäße Bandpassfilter weist eine Durchtrittsfläche mit verschiedenen Flächenbereichen auf, die in der ersten und der zweiten Richtung nebeneinander angeordnet sind und die sich hinsichtlich der unteren und/oder oberen Grenzwellenlänge des Bandpassfilters unterscheiden. Über die verschiedenen Flächenbereiche hinweg variiert nicht nur die Lage, sondern auch die Bandbreite des Wellenlängenbereichs, die aus einem hier auftreffenden Lichtstrahl selektiert wird. Konkret ändert sich zwischen in der ersten Richtung aufeinander folgenden Flächenbereichen nur die durch das Langpassfilter vorgegebene untere Grenzwellenlänge, während sich zwischen in der zweiten Richtung aufeinander folgenden Flächenbereichen nur die durch das Kurzpassfilter vorgegebene obere Grenzwellenlänge des Bandpassfilters ändert. Bei in einer Zwischenrichtung zwischen der ersten und der zweiten Richtung aufeinander folgenden Flächenbereichen ändert sich sowohl die untere als auch die obere Grenzwellenlänge, wobei die Bandbreite des selektierten Wellenlängenbereichs gleich bleiben kann. Streng gilt die Aussage, dass sich in der ersten Richtung nur die untere Grenzwellenlänge und in der zweiten Richtung nur die obere Grenzwellenlänge ändert, wenn die beiden Richtungen in einer Projektion auf die Fläche des erfindungsgemäßen Bandpassfilters oder längs eines Strahlengangs, in dem das Langpassfilter und das Kurzpassfilter in Reihe geschaltet sind, orthogonal zueinander verlaufen. Die Variabilität bezüglich sowohl der Lage als auch der Bandbreite des selektierten Wellenlängenbereichs setzt aber einen solchen orthogonalen Verlauf der beiden Richtungen nicht voraus. Hierfür reicht es aus, wenn die erste und die zweite Richtung insoweit quer sind, als dass sie in der voranstehend definierten Projektion linear voneinander unabhängig sind. Praktisch ist es jedoch bevorzugt, wenn der kleinere Winkel zwischen den beiden Richtungen in dieser Projektion nicht kleiner als 30°, vorzugsweise nicht kleiner als 45° und noch mehr bevorzugt nicht kleiner als 60° ist. Am meisten bevorzugt ist er nicht kleiner als 75°, und er liegt bei 90°.

Die beiden Richtungen können insbesondere zwei zueinander orthogonale lineare Richtungen sein. Bei der einen der beiden Richtungen kann es sich jedoch bezogen auf eine optische Achse des Strahlengangs um eine radiale Richtung handeln, während die andere Richtung eine dazu orthogonale Umfangsrichtung ist.

Bei dem erfindungsgemäßen Bandpassfilter sind das Langpassfilter und das Kurzpassfilter insbesondere derart fest zueinander angeordnet, dass Licht, das auf einen bestimmten Flächenbereich des jeweils vorne liegenden Langpassfilters oder Kurzpassfilters fällt danach auf einen diesem Flächenbereich eineindeutig zugeordneten Flächenbereich des jeweils hinten liegenden Kurzpassfilters oder Langpassfilters fällt. Anders gesagt sind das flächige Langpassfilter und das flächige Kurzpassfilter typischerweise mit geringem Abstand fest parallel zueinander angeordnet.

Konkret können das Langpassfilter und das Kurzpassfilter miteinander verkittet sein, beispielsweise auch flächig mit einem transparenten optischen Kitt. In einer weiteren konkreten Ausführungsform sind ein das Langpassfilter ausbildendes erstes Dünnschichtsystem und ein das Kurzpassfilter ausbildendes zweites Dünnschichtsystem auf einem selben Substrat angeordnet, beispielsweise an dessen Vorder- und Rückseite.

Die untere Grenzwellenlänge des Langpassfilters kann in der ersten Richtung monoton ansteigen. Entsprechend kann die obere Grenzwellenlänge des Kurzpassfilters in der zweiten Richtung monoton abfallen. Dies schließt die Möglichkeit ein, dass die untere und/oder die obere Grenzwellenlänge stufenförmig, d. h. in diskreten Schritten ansteigen. Dann ergibt sich bei zueinander orthogonalen ersten und zweiten Richtungen ein Schachbrettmuster von unterschiedlichen Flächenbereichen des erfindungsgemäßen Bandpassfilters mit unterschiedlichen Lagen und Bandbreiten des selektierten Wellenlängenbereichs.

Die unteren Grenzwellenlängen des Langpassfilters können in der ersten Richtung auch streng monoton oder sogar linear ansteigen. Ebenso können die oberen Grenzwellenlängen des Kurzpassfilters in der zweiten Richtung streng monoton oder linear abfallen. Dann handelt es sich bei dem Langpassfilter und dem Kurzpassfilter jeweils um ein sogenanntes Verlaufsfilter oder Gradientenfilter. Mit Hilfe zweier solcher Gradientenfilter einmal als Langpassfilter und einmal als Kurzpassfilter, deren Gradienten quer zueinander verlaufen, wird eine Vielzahl von bezüglich Lage und Bandbreite unterschiedlicher Wellenlängenbereiche mit dem erfindungsgemäßen Bandpassfilter selektierbar. Über keinen Flächenbereich des erfindungsgemäßen Bandpassfilters mit endlichen Abmessungen sind die untere Grenzwellenlänge und die obere Grenzwellenlänge zwar exakt konstant, die hier auftretenden Variationen bleiben aber bei nicht zu großem Gradienten der Gradientenfilter und nicht zu großen betrachteten Flächenbereichen vernachlässigbar klein.

Besonders einfache Verhältnisse in Bezug auf die Zuordnung der unterschiedlichen Flächenbereiche des erfindungsgemäßen Bandpassfilters zu bestimmten unteren und oberen Grenzwellenlängen ergibt sich dann, wenn eine erste Steigung der unteren Grenzwellenlängen des Langpassfilters in der ersten Richtung und eine zweite Steigung der oberen Grenzwellenlängen des Kurzpassfilters in der zweiten Richtung einen gleichen konstanten Betrag aufweisen.

Es versteht sich, dass bei dem erfindungsgemäßen Bandpassfilter zumindest die unteren Grenzwellenlängen in einigen der Flächenbereiche des Langpassfilters kleiner sind als die oberen Grenzwellenlängen in einigen der Flächenbereich des Kurzpassfilters. Da das erfindungsgemäße Bandpassfilter überhaupt nur dort nutzbar ist, wo Flächenbereiche des Langpassfilters und des Kurzpassfilters miteinander kombiniert sind, in denen die untere Grenzwellenlänge nicht größer als die obere Grenzwellenlänge ist, sollte die größte obere Grenzwellenlänge des Kurzpassfilters auch nicht kleiner als die kleinste untere Grenzwellenlänge des Langpassfilters sein.

Wenn die größte untere Grenzwellenlänge umgekehrt kleiner als die kleinste obere Grenzwellenlänge ist, ist das erfindungsgemäße Bandpassfilter zwar über die gesamte Überdeckung des Langpassfilters und des Kurzpassfilters aktiv, es gibt aber nur wenige selektierbare Wellenlängenbereiche mit geringer Bandbreite. So erweist es sich als vorteilhaft, wenn ein von den unteren Grenzwellenlängen des Langpassfilters in der ersten Richtung überspannter erster Wellenlängenbereich und ein von den oberen Grenzwellenlängen des Kurzpassfilter in der zweiten Richtung überspannter zweiter Wellenlängenbereich einander zu mindestens 25 %, bevorzugt zu mindestens 50 % und oftmals noch mehr bevorzugt zu mindestens 75 % oder gar 100 % überlappen. Die Überlappung gibt direkt die Wellenlängenbereiche vor, die mit geringer Bandbreite selektiert werden können. Umgekehrt steigt mit zunehmender Überlappung die Fläche der inaktiven Flächenbereiche des erfindungsgemäßen Bandpassfilters bis auf 50 % (bei 100 % Überlappung unter Annahme symmetrischer Verhältnisse) an.

Eine erfindungsgemäße Vorrichtung zum Selektieren eines Wellenlängenbereichs aus einem Lichtstrahl mit einem erfindungsgemäßen Bandpassfilter ist durch eine Strahlverlagerungseinrichtung gekennzeichnet, die dazu ausgebildet ist, den Lichtstrahl quer zu seiner Ausbreitungsrichtung gegenüber dem Bandpassfilter zu verlagern. Die Strahlverlagerungseinrichtung kann das erfindungsgemäße Bandpassfilter beispielsweise gegenüber dem ortsfesten Lichtstrahl quer zu dessen Ausbreitungsrichtung verschieben, so dass der Lichtstrahl auf einen Bereich der Durchtrittsfläche des erfindungsgemäßen Bandpassfilters auftrifft, in dem ein Flächenbereich seines Langpassfilters mit der gewünschten unteren Grenzwellenlänge und ein Flächenbereich seines Kurzpassfilters mit der gewünschten oberen Grenzwellenlänge in beliebiger Reihenfolge aufeinander folgen, um den gewünschten Wellenlängenbereich zu selektieren.

Vielfach erweist es sich jedoch als aufwändig, das Bandpassfilter, das typische Abmessungen der ersten und der zweiten Richtung von mehreren Zentimetern aufweist, schnell und präzise gegenüber dem ortsfesten Lichtstrahl zu verlagern, um beispielsweise nacheinander präzise definierte Wellenlängenbereiche zu selektieren, wobei auch die Masseträgheit des Bandpassfilters ins Gewicht fällt. Daher ist es bevorzugt, wenn die Strahlverlagerungseinrichtung dazu ausgebildet ist, den Lichtstrahl, beispielsweise mit Hilfe von Kippspiegeln, gegenüber dem ruhenden Bandpassfilter zu verlagern.

In jedem Fall kann bei der erfindungsgemäßen Vorrichtung dem Bandpassfilter ein punktförmiger oder ein flächenflächenförmiger Lichtdetektor nachgeschaltet sein. Ein punktförmiger Lichtdetektor ist dabei dem Lichtstrahl zuzuordnen, d. h. auf der Fortsetzung des Lichtstrahls hinter dem Bandpassfilter anzuordnen, so dass er immer von dem Lichtstrahl getroffen wird, soweit dieser aufgrund der enthaltenen Wellenlängen durch das Bandpassfilter hindurchtritt. Der flächige Lichtdetektor kann hingegen dem Bandpassfilter zugeordnet werden, so dass unterschiedliche Bereiche des Lichtdetektors die durch unterschiedliche Bereiche der Durchtrittsfläche des Bandpassfilters hindurchtretende Lichtintensitäten registrieren. Wenn der Lichtstrahl mit Hilfe der Strahlverlagerungseinrichtung nacheinander auf verschiedene Bereiche der Durchtrittsfläche des erfindungsgemäßen Bandpassfilters gerichtet und dabei die Lichtintensitäten, die zu dem Lichtdetektor gelangen, registriert werden, kann die spektrale Zusammensetzung des Lichtstrahls analysiert werden. Dabei können zunächst nebeneinander liegende Wellenlängenbereiche größerer Bandbreite gemessen werden und nur die Wellenlängenbereiche in kleinere Wellenlängenbereiche aufgeteilt werden, für die Lichtintensitäten registriert wurden.

Auch ein flächiger Lichtdetektor, der den Ort des Auftreffens des Lichts des Lichtstrahls auflöst, kann so auf der Fortsetzung des Lichtstrahls hinter dem Bandpassfilter angeordnet werden, dass er immer von dem Lichtstrahl getroffen wird, soweit dieser aufgrund der enthaltenen Wellenlängen durch das Bandpassfilter hindurchtritt. Beispielsweise aus Claus B. Müller und Jörg Enderlein: Image Scanning Microscopy, Phys. Rev. Lett. 104, 198101 (2010) ist ein Verfahren mit zur fokussierten Anregung konfokaler Detektion bekannt, bei dem ein Beugungsbild des Detektionslichts mit einem flächigen Lichtdetektor aufgezeichnet und in der Folge ausgewertet wird. Die erfindungsgemäße Vorrichtung kann bei einem solchen Verfahren ebenso wie bei Verfahren mit konfokaler Detektion mit einem punktförmigen Lichtdetektor dazu verwendet werden, um schnell zwischen verschiedenen Detektionswellenlängen umzuschalten, so dass eine quasi-gleichzeitige Detektion von Detektionslichts mit den verschiedenen Detektionswellenlängen erreicht wird.

Bei der erfindungsgemäßen Vorrichtung zum Selektieren eines Wellenlängenbereichs aus einem Lichtstrahl kann ein weiteres ebenfalls erfindungsgemäßes Bandpassfilter im Strahlengang eines von dem ersten Bandpassfilter reflektierten Anteils des Lichtstrahls mit Wellenlängen außerhalb des von dem Bandpassfilter selektierten Wellenlängenbereichs angeordnet sein, mit dem dann ein weiterer Wellenlängenbereich aus dem Lichtstrahl selektierbar ist. In analoger Weise kann auch noch ein weiteres erfindungsgemäßes Bandpassfilter im Strahlengang eines von dem weiteren Bandpassfilter reflektierten Anteils des Lichtstrahls mit Wellenlängen außerhalb der von dem Bandpassfilter und dem weiteren Bandpassfilter selektierten Wellenlängenbereiche angeordnet sein, um noch einen weiteren Wellenlängenbereich aus dem Lichtstrahl zu selektieren.

Um das sich zweidimensional erstreckende Bandpassfilter auszunutzen, ist die Strahlverlagerungseinrichtung vorzugsweise zweiachsig ausgebildet, so dass der Lichtstrahl mit ihr in zwei verschiedenen, beispielsweise zwei zueinander orthogonalen Richtungen quer zu der Ausbreitungsrichtung des Lichtstrahls gegenüber dem Bandpassfilter verlagerbar ist.

In einer konkreten Ausführungsform weist die Strahlverlagerungseinrichtung der erfindungsgemäßen Vorrichtung einen zweiachsigen Kippspiegel, eine den Lichtstrahl auf den Kippspiegel fokussierende Optik, einen den von dem Kippspiegel abgelenkten Lichtstrahl kollimierenden Off-Axis-Parabolspiegel und einen weiteren, den kollimierten Lichtstrahl auf einen ortsfesten Brennpunkt fokussierenden Off-Axis-Parabolspiegel auf, wobei das erfindungsgemäße Bandpassfilter zwischen den beiden Off-Axis-Parabolspiegeln angeordnet ist. Bei unterschiedlicher Verkippung des zweiachsigen Kippspiegels um seine beiden Kippachsen gelangt der kollimierte Lichtstrahl auf und durch unterschiedliche Flächenbereiche des erfindungsgemäßen Bandpassfilters.

In einer anderen konkreten Ausführungsform weist die Strahlverlagerungseinrichtung der erfindungsgemäßen Vorrichtung einen den Lichtstrahl zuführenden Lichtleiter, eine den aus dem Lichtleiter austretenden Lichtstrahl kollimierende Optik, einen ersten einachsigen Kippspiegel und einen zweiten einachsigen Kippspiegel, die den kollimierten Lichtstrahl aufeinander folgend in zwei unterschiedlichen Richtungen ablenken, einen Vollspiegel für den abgelenkten Lichtstrahl, eine den abgelenkten Lichtstrahl senkrecht auf den Vollspiegel fokussierende und eine zu einer Rotationsachse rotationssymmetrische Linse umfassende Linsenkombination und einen den von dem Vollspiegel reflektierten Lichtstrahl von dem aus dem Lichtleiter austretenden und mit der Linse kollimierten Lichtstrahl abtrennenden Kantenspiegel auf. Das Bandpassfilter ist nahe vor dem Vollspiegel angeordnet und soweit gegenüber dem Vollspiegel verkippt, dass ein von dem Bandpassfilter reflektierter Anteil des Lichtstrahls mit Wellenlängen außerhalb des von dem Bandpassfilter selektierten Wellenlängenbereichs von dem Bandpassfilter aus dem weiteren Strahlengang heraus reflektiert wird. Der von dem Vollspiegel reflektierte Lichtstrahl mit dem selektierten Wellenlängenbereich wird beim erneuten Durchgang durch die Linsenkombination in rückläufiger Richtung erneut kollimiert und von den Kippspiegeln entscannt; und die Rotationsachse der rotationssymmetrischen Linse ist gegenüber einer Strahlachse bei null Auslenkung der Kippspiegel derart parallelversetzt angeordnet, dass der von dem Vollspiegel reflektierte Lichtstrahl nach dem Durchtritt durch die Linsenkombination gegenüber dem einfallenden Lichtstrahl soweit lateral verschoben ist, dass er mit dem Kantenspiegel von dem aus dem Lichtleiter austretenden und mit der Linse kollimierten Lichtstrahl abtrennbar ist. Bei dieser erfindungsgemäßen Vorrichtung tritt der Lichtstrahl zweimal durch den jeweiligen Flächenbereich des erfindungsgemäßen Bandpassfilters hindurch, wodurch die Selektivität für den selektierten Wellenlängenbereich erhöht wird.

Vorzugsweise sind die beiden unterschiedlichen Richtungen, in denen die beiden Kippspiegel dieser Ausführungsform der erfindungsgemäßen Vorrichtung ablenken, orthogonal zueinander, und die Linsenkombination umfasst weiterhin eine Zylinderlinse, deren Zylinderachse parallel zur Kippachse des zweiten Kippspiegels verläuft und die derart nahe dem Vollspiegel angeordnet ist, dass die Zylinderlinse die Kippachse des zweiten Kippspiegels in den eingangsseitigen Brennpunkt der rotationssymmetrischen Linse verschiebt, durch den auch die Kippachse des ersten Kippspiegels verläuft. So wird mit Hilfe der Zylinderlinse auch ohne eine Abbildung der Kippspiegel aufeinander eine Verkippung des Strahls in zwei Richtungen ohne gleichzeitige Änderung der Strahllage ermöglicht. In der von dieser Ausführungsform der Vorrichtung umfassten Kombination von zwei einen kollimierten Lichtstrahl in zwei zueinander orthogonalen Richtungen ablenkenden Kippspiegeln mit einer rotationssymmetrischen Linse und einer Zylinderlinse, die die Kippachse des zweiten Kippspiegels in den eingangsseitigen Brennpunkt der rotationssymmetrischen Linse verschiebt, durch den auch die Kippachse des ersten Kippspiegels verläuft, so dass auch ohne Abbildung der Kippspiegel aufeinander in der Fokusebene der rotationssymmetrischen Linse eine Verlagerung des Strahls in zwei Richtungen ohne eine gleichzeitige Verkippung möglich ist, ist eine eigenständige Erfindung zu sehen. Die Anwendung dieser Erfindung in einem optischen Scanner erlaubt es unter Verwendung einer zusätzlichen Linse, einen Lichtstrahl ohne eine gleichzeitige Änderung der Strahllage in der Pupillenebene eines Objektivs zu verkippen. Von weiteren Bestandteilen der in den Patentansprüchen definierten Vorrichtung, ist diese eigenständige Erfindung unabhängig.

Bei dem erfindungsgemäßen Laser-Scanning-Mikroskop ist mindestens eine erfindungsgemäße Vorrichtung im Anregungs- und/oder Detektionsstrahlengang vorgesehen, um beispielsweise aus einem Lichtstrahl von einer breitbandigen Lichtquelle einen schmalbandigen Wellenlängenbereich als Anregungslicht zu selektieren und/oder um aus dem von einer Probe kommenden Licht einen bestimmten Wellenlängenbereich als zu registrierendes Fluoreszenzlicht zu selektieren.

Soweit hier von Licht insbesondere eines Lichtstrahls die Rede ist, so ist damit Licht aus dem sichtbaren und auch den angrenzenden infraroten und ultravioletten Bereichen gemeint. Entsprechend können sich die Wellenlängen und damit auch die unteren Wellenlängengrenzen und die oberen Wellenlängengrenzen im Bereich von wenigen 100 nm bis zu wenigen 1.000 nm bewegen. Besonders bevorzugt liegen die Wellenlängen im sichtbaren Bereich und damit zwischen 350 nm und 750 nm.

Vorteilhafte Weiterbildungen der Erfindung ergeben sich aus den Patentansprüchen, der Beschreibung und den Zeichnungen. Die in der Beschreibung genannten Vorteile von Merkmalen und von Kombinationen mehrerer Merkmale sind lediglich beispielhaft und können alternativ oder kumulativ zur Wirkung kommen, ohne dass die Vorteile zwingend von erfindungsgemäßen Ausführungsformen erzielt werden müssen. Ohne dass hierdurch der Gegenstand der beigefügten Patentansprüche verändert wird, gilt hinsichtlich des Offenbarungsgehalts der ursprünglichen Anmeldungsunterlagen und des Patents Folgendes: weitere Merkmale sind den Zeichnungen - insbesondere den dargestellten Geometrien und den relativen Abmessungen mehrerer Bauteile zueinander sowie deren relativer Anordnung und Wirkverbindung - zu entnehmen. Die Kombination von Merkmalen unterschiedlicher Ausführungsformen der Erfindung oder von Merkmalen unterschiedlicher Patentansprüche ist ebenfalls abweichend von den gewählten Rückbeziehungen der Patentansprüche möglich und wird hiermit angeregt. Dies betrifft auch solche Merkmale, die in separaten Zeichnungen dargestellt sind oder bei deren Beschreibung genannt werden. Diese Merkmale können auch mit Merkmalen unterschiedlicher Patentansprüche kombiniert werden. Ebenso können in den Patentansprüchen aufgeführte Merkmale für weitere Ausführungsformen der Erfindung entfallen.

Die in den Patentansprüchen und der Beschreibung genannten Merkmale sind bezüglich ihrer Anzahl so zu verstehen, dass genau diese Anzahl oder eine größere Anzahl als die genannte Anzahl vorhanden ist, ohne dass es einer expliziten Verwendung des Adverbs "mindestens" bedarf. Wenn also beispielsweise von einem weiteren Bandpassfilter die Rede ist, ist dies so zu verstehen, dass genau ein weiteres Bandpassfilter, zwei weitere Bandpassfilter oder mehr weitere Bandpassfilter vorhanden sind. Die in den Patentansprüchen angeführten Merkmale können durch andere Merkmale ergänzt werden oder die einzigen Merkmale sein, die das jeweilige Erzeugnis aufweist.

Die in den Patentansprüchen enthaltenen Bezugszeichen stellen keine Beschränkung des Umfangs der durch die Patentansprüche geschützten Gegenstände dar. Sie dienen lediglich dem Zweck, die Patentansprüche leichter verständlich zu machen.

### KURZBESCHREIBUNG DER FIGUREN

Im Folgenden wird die Erfindung anhand in den Figuren dargestellter bevorzugter Ausführungsbeispiele weiter erläutert und beschrieben.
- **Fig. 1**: zeigt ein Langpassfilter und ein damit in Reihe geschaltetes Kurzpassfilter einer ersten Ausführungsform des erfindungsgemäßen Bandpassfilters in schematischer perspektivischer Darstellung.
- **Fig. 2**: zeigt ein Langpassfilter und ein damit in Reihe geschaltetes Kurzpassfilter einer zweiten Ausführungsform des erfindungsgemäßen Bandpassfilters in schematischer perspektivischer Darstellung.
- **Fig. 3**: erläutert die Funktion des erfindungsgemäßen Bandpassfilters in einer Fig. 1 ähnlichen Ausführungsform.
- **Fig. 4**: zeigt eine erfindungsgemäße Vorrichtung zum Selektieren eines Wellenlängenbereichs, beispielsweise in einem Detektionsstrahlengang eines Laser-Scanning-Mikroskops, und
- **Fig. 5**: zeigt eine weitere Ausführungsform der erfindungsgemäßen Vorrichtung zum Selektieren eines Wellenlängenbereichs.

### FIGURENBESCHREIBUNG

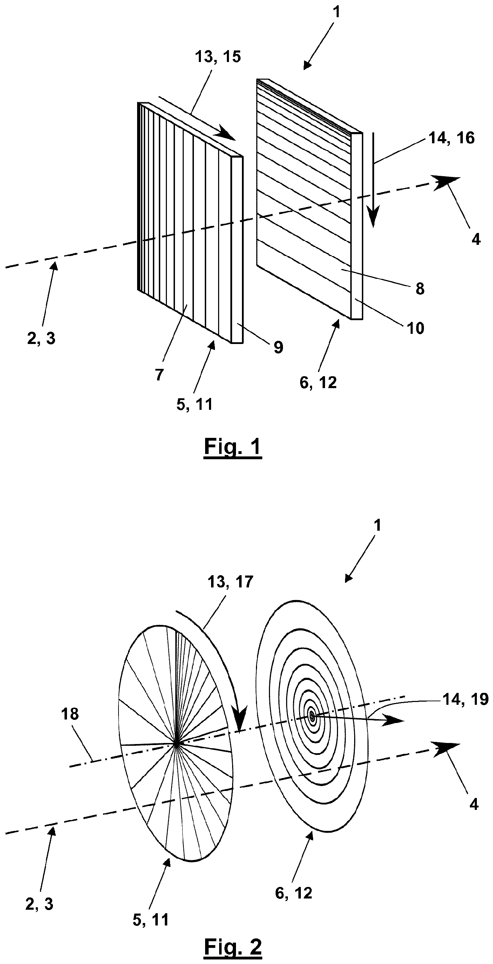

Das in **Fig. 1** dargestellten Bandpassfilter 1 für Licht 2, das sich als Lichtstrahl 3 in einer Ausbreitungsrichtung 4 ausbreitet, weist ein Langpassfilter 5 und ein damit in Reihe geschaltetes Kurzpassfilter 6 auf. Dabei ist die Reihenfolge des Langpassfilters 5 und des Kurzpassfilters 6 in der Ausbreitungsrichtung 4 nicht relevant. Auch wenn das Langpassfilter 5 und das Kurzpassfilter 6 hier als separate Komponenten dargestellt ist, sind sie bei dem Bandpassfilter 1 räumlich fest zueinander angeordnet, und sie folgen in der Ausbreitungsrichtung 4 vorzugsweise unmittelbar aufeinander. Dazu können Dünnschichtsysteme 7 und 8, die das Langpassfilter 5 bzw. das Kurzpassfilter 6 ausbilden und gemäß Fig. 1 auf jeweils eigenen Substraten 9 und 10 angeordnet sind, auf einem einzigen Substrat angeordnet sein, beispielsweise auf dessen Vor- und Rückseite, alternativ aber auch auf derselben Seite des Substrats. Das Langpassfilter 5 definiert eine untere Grenzwellenlänge des Bandpassfilters 1, während das Kurzpassfilter 6 eine obere Grenzwellenlänge des Bandpassfilters 1 definiert. Dabei sind das Langpassfilter 5 und das Kurzpassfilter 6 jeweils als Gradientenfilter 11 bzw. 12 ausgebildet, die in verschiedenen Flächenbereichen ihrer Haupterstreckungsebene unterschiedliche untere bzw. obere Grenzwellenlängen vorgeben. Dabei nimmt die untere Grenzwellenlänge, die von dem Langpassfilter 5 vorgegeben wird, in einer ersten Richtung 13 zu, während die von dem Kurzpassfilter 6 vorgegeben obere Grenzwellenlänge in einer zweiten Richtung 14 zunimmt. Dabei sind die erste Richtung 13 und die zweite Richtung 14 lineare Richtungen 15 und 16, die in einer Projektion längs der Ausbreitungsrichtung 4 orthogonal zueinander verlaufen. Auf diese Weise ergeben sich über die Haupterstreckungsebene des Bandpassfilters 1 verteilte Bereiche seiner Durchtrittsfläche mit unterschiedlichen Kombinationen der unteren Grenzwellenlänge und der oberen Grenzwellenlänge. Durch Richten des Lichtstrahls 3 auf einen dieser Bereiche wird aus dem Lichtstrahl 3 ein Wellenlängenbereich selektiert, der durch die zu diesem Flächenbereich zugehörigen unteren und oberen Grenzwellenlängen begrenzt ist. Über die Auswahl des Bereichs der Durchtrittsfläche des Bandpassfilters 1, auf den der Lichtstrahl 3 gerichtet wird, kann sowohl die Lage, die man mit dem Mittelwert der unteren und der oberen Grenzwellenlängen gleichsetzen kann, als auch die Bandbreite, d. h. die Differenz zwischen der unteren Grenzwellenlänge und der oberen Grenzwellenlänge, ausgewählt werden. Insoweit sind Lage und Bandbreite des selektierten Wellenlängenbereichs bei dem Bandpassfilter 1 variabel und innerhalb dieser Variabilität wählbar.

Bei der Ausführungsform des Bandpassfilters 1 gemäß **Fig. 2** besteht gegenüber der Ausführungsform gemäß Fig. 1 ein Unterschied darin, dass die erste Richtung 13, in der die untere Grenzwellenlänge des Langpassfilters 5 ansteigt, eine Drehrichtung 17 um eine optische Achse 18 ist, die parallel zu der Ausbreitungsrichtung 4 des Lichtstrahls 3 verläuft, und dass die zweite Richtung 14, in der die obere Grenzwellenlänge des Kurzpassfilters 6 ansteigt, eine dazu orthogonale, bezogen auf die optische Achse 18 radiale Richtung 19 ist. Entsprechend sind die Bereiche der Durchtrittsfläche des Bandpassfilters, die die unterschiedlichen Wellenlängenbereiche definieren, welche mit dem Bandpassfilter aus dem Lichtstrahl 3 selektiert werden, auf Kreisbahnen unterschiedlichen Durchmessers um die optische Achse 18 herum angeordnet.

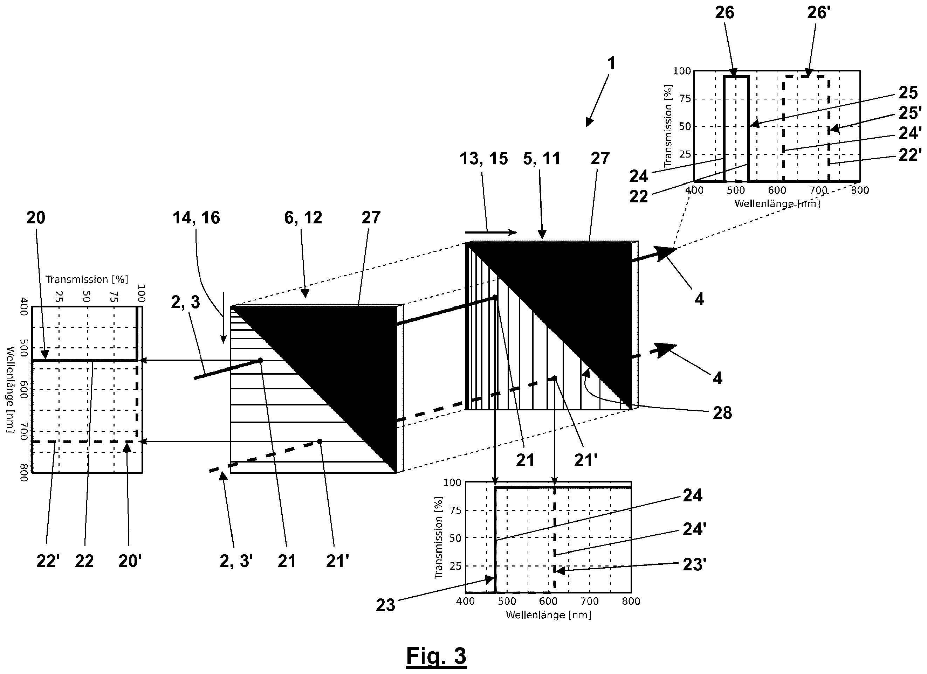

**Fig. 3** erläutert die Wirkungsweise des Bandpassfilters 1 in einer Ausführungsform, die von derjenigen gemäß Fig. 1 durch eine umgekehrte Reihenfolge des Kurzpassfilters 6 und des Langpassfilters 5 in der Ausbreitungsrichtung 4 unterscheidet. Dabei sind für das als Gradientenfilter 12 ausgebildete Kurzpassfilter 6 die Transmissionsspektren 20 und 20' dargestellt, die sich für verschiedene Auftrefforte 21 bzw. 21' des Lichtstrahls 3 bzw. 3' auf das Bandpassfilter 1 ergeben. Die beiden Transmissionsspektren 20 und 20' unterscheiden sich durch unterschiedliche obere Grenzwellenlängen 22 bzw. 22'. Weiterhin gibt Fig. 3 Transmissionsspektren 23 und 23' des ebenfalls als Gradientenfilter 11 ausgebildeten Langpassfilters 5 wieder, die sich für die Auftrefforte 21 bzw. 21' des Lichtstrahls 3, 3' auf das Bandpassfilter 1 ergeben. Diese Transmissionsspektren 23 und 23' weisen unterschiedliche untere Grenzwellenlängen 24 und 24' auf. Aus der Überlagerung der Transmissionsspektren 20 und 23 einerseits sowie 20' und 23' andererseits ergeben sich Gesamttransmissionsspektren 25 und 25', bei denen jeweils ein Passband 26 bzw. 26' durch die untere Grenzwellenlänge 24 und die obere Grenzwellenlänge 22 bzw. die untere Grenzwellenlänge 24' und die obere Grenzwellenlänge 22' begrenzt ist. Das Passband 26 bzw. 26' gibt den Wellenlängenbereich an, der von dem Bandpassfilter 1 aus dem einfallenden Lichtstrahl 3, 3' selektiert wird, indem er als einziger durch das Bandpassfilter 1 hindurchtritt. Fig. 3 zeigt auch einen Sperrbereich 27 des Bandpassfilters an, in dem das Bandpassfilter 1 nicht transparent ist, weil hier die untere Grenzwellenlänge 24 größer als die obere Grenzwellenlänge 22 ist. Der Sperrbereich 27 macht hier die Hälfte der aktiven Fläche, d. h. der potentiellen Durchtrittsfläche, des Bandpassfilters 1 aus, weil sich die von den oberen Grenzwellenlängen 22 und 22' und den unteren Grenzwellenlängen 24, 24' überspannten Wellenlängenbereich vollständig überschneiden und zudem die oberen Grenzwellenlängen 22, 22' ebenso wie die unteren Grenzwellenlängen 24, 24' linear in der linearen zweiten Richtung 14, 16 und der linearen ersten Richtung 13, 15 ansteigen. An einer Grenze 28 des Sperrbereichs 27 liegen die Bereiche der Durchtrittsfläche des Bandpassfilters 1, in denen das Passband 26, 26' seine geringste Bandbreite aufweist. Mit zunehmendem Abstand zu der Grenze 28 nimmt diese Bandbreite zu. Durch einen zu kleineren Wellenlängen hin verschobenen Wellenlängenbereich der unteren Grenzwellenlängen 24, 24' des Langpassfilters 5 bzw. einen zu größeren Wellenlängen hin verschobenen Wellenlängenbereich der oberen Grenzwellenlängen 22, 22' des Kurzpassfilters 6 würde sich die Grenze 28 derart parallel verschieben lassen, dass der Sperrbereich 27 kleiner wird. Hierdurch würde jedoch der Wellenlängenbereich eingeschränkt, über den hinweg Passbänder 26, 26' mit geringer Bandbreite genutzt werden können.

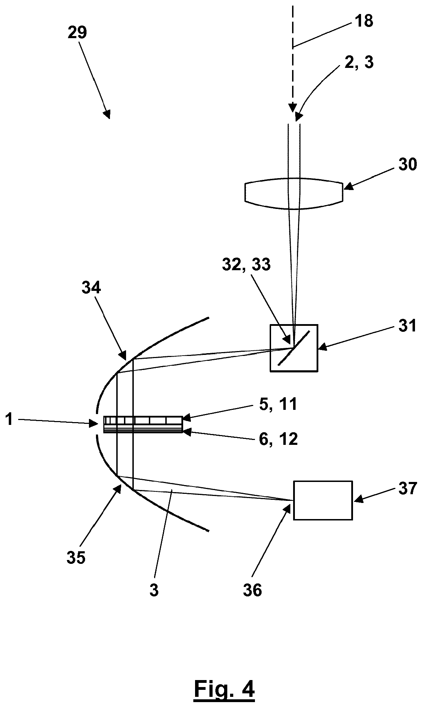

**Fig. 4** zeigt eine Vorrichtung 29 zum Selektieren eines Wellenlängenbereichs aus dem längs der optischen Achse 18 einfallenden Lichtstrahl 3. Von einer fokussierenden Optik 30 wird der einfallende Lichtstrahl 3 auf einen zweiachsigen Kippspiegel 31 fokussiert, so dass der Brennpunkt 32 des Lichtstrahls 3 mit dem Kipppunkt 33, d. h. dem Schnittpunkt der beiden Kippachsen des Kippspiegels 31, zusammenfällt. Der Kippspiegel 31 lenkt den Lichtstrahl 3 auf eine Kollimationsoptik in Form eines Off-Axis-Parabolspiegels 34 um. Der von der Kollimationsoptik kollimierte Lichtstrahl 3 trifft auf einen Flächenbereich des Bandpassfilters 1, der mit Hilfe des Kippspiegels 31 auswählbar ist, und zwar sowohl innerhalb der Zeichenebene von Fig. 4 als auch senkrecht dazu. Hinter dem Bandpassfilter 1 trifft der kollimierte Lichtstrahl mit dem durch das Bandpassfilter 1 selektierten Wellenlängenbereich auf einen weiteren Off-Axis-Parabolspiegel 35, der diesmal als fokussierende Optik dient, die den Lichtstrahl 3 in einen ortsfesten Brennpunkt 36 fokussiert. Der Brennpunkt 36 ist insoweit ortsfest, als dass er sich beim Verkippen des Kippspiegels 31 nicht ändert. Es ändert sich nur der Winkel, unter dem der Lichtstrahl 3 zu dem Brennpunkt 36 gelangt. Dieser unterschiedliche Winkel könnte mit Hilfe eines zweiten zweiachsigen Kippspiegels kompensiert werden. Dabei könnte dieser zweite zweiachsige Kippspiegel in gleicher Weise wie der Kippspiegel 31 angesteuert werden, wenn die beiden Off-Axis-Parabolspiegel 34 und 35 symmetrisch zueinander angeordnet und ausgebildet sind. Grundsätzlich können die beiden Off-Axis-Parabolspiegel 34 und 35 aber auch unterschiedliche Brennweiten aufweisen. Dann wären die beiden zweiachsigen Kippspiegel entsprechend zwar immer noch synchron, aber nicht auf gleiche Winkeländerungen hin anzusteuern. Gemäß Fig. 4 ist statt eines weiteren zweiachsigen Kippspiegels an dem ortsfesten Brennpunkt 36 ein Detektor 37 angeordnet, der die Intensität des Lichts 2 des Lichtstrahls 3 in dem mit dem Bandpassfilter 1 selektierten Wellenlängenbereich misst. Als Detektor 37 reicht ein Punktdetektor aus, der insbesondere eine Avalanche-Fotodiode oder einen Fotomultiplier umfassen kann. Statt eines Punktdetektors könnte auch ein Flächendetektor, insbesondere eine CCD- oder CMOS-Kamera oder ein Detektorarray verwendet werden. Dieses könnte dann direkt hinter dem Bandpassfilter 1 anstelle des Off-Axis-Parabolspiegels 35 angeordnet sein, so dass jedem Bereich der Durchtrittsfläche des Bandpassfilters 1 ein Bereich des räumlich auflösenden Flächendetektors oder des Detektorarrays zugeordnet ist. Die Vorrichtung 29 gemäß Fig. 4 kann beispielsweise im Detektionsstrahlengang eines Laser-Scanning-Mikroskops zur wellenlängenselektiven Detektion von Fluoreszenzlicht verwendet werden.

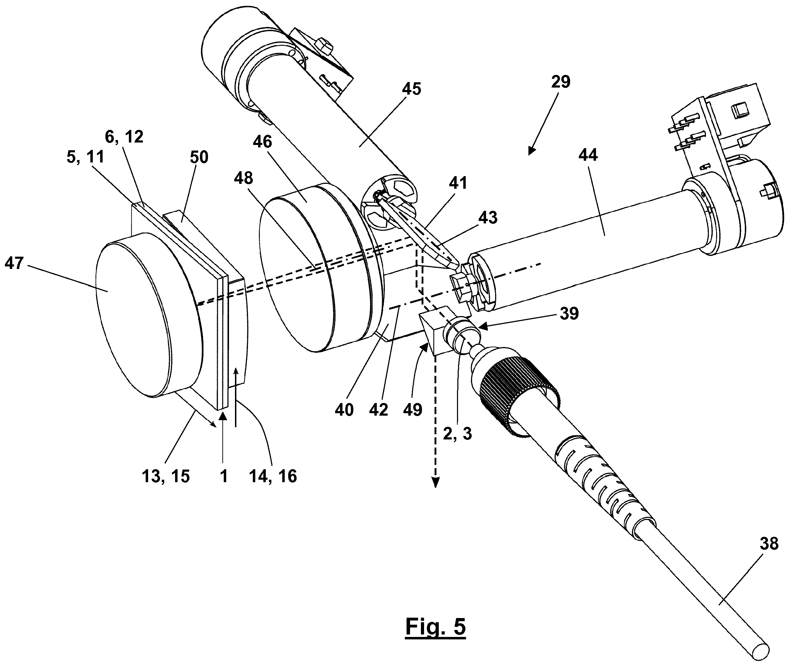

Die in **Fig. 5** gezeigte Vorrichtung 29 zum Selektieren eines Wellenlängenbereichs aus einem Lichtstrahl 3 umfasst einen Lichtleiter 38 zum Zuführen des Lichtstrahls 3. Das aus dem Lichtleiter 38 austretende Licht 2 des Lichtstrahls 3 wird von einer kollimierenden Optik 39 kollimiert. Der kollimierte Lichtstrahls 3 trifft nacheinander auf einen ersten einachsigen Kippspiegel 40 und einen zweiten einachsigen Kippspiegel 41, deren Kippachsen 42 und 43 in einer Projektion längs des Lichtstrahls 3 orthogonal zueinander verlaufen. Die Kippspiegel 40 und 41 sind um ihre Kippachsen 42 und 43 jeweils mit Hilfe eines Galvomotors 44 bzw. 45 verkippbar. Derartige Kippspiegel 40 und 41 werden auch als Drehspiegel bezeichnet. Nach dem zweiten Drehspiegel 41 wird der Lichtstrahls 3 von einer rotationssymmetrischen Linse 46 auf die Spiegelfläche eines Vollspiegels 47 fokussiert. Unmittelbar vor der Spiegelfläche des Vollspiegels 47 ist das Bandpassfilter 1 angeordnet. Mit Hilfe der Kippspiegel 40 und 41 wird der Bereich der Durchtrittsfläche des Bandpassfilters 1 festgelegt, durch den der Lichtstrahl 3 auf seinem Weg zu der Spiegelfläche des Vollspiegels 47 und auf seinem Rückweg von der Spiegelfläche hindurchtritt. Das doppelte Hindurchtreten des Lichtstrahls 3 durch diesen Bereich der Durchtrittsfläche hat zur Folge, dass die außerhalb des selektierten Wellenlängenbereichs liegenden Wellenlängen des Lichts 2 des Lichtstrahls 3 stärker unterdrückt werden als bei einem nur einmaligen Hindurchtreten. Relativ zu der Spiegelfläche des Vollspiegels 47 ist das Bandpassfilter 1 leicht verkippt, so dass Anteile des Lichtstrahls 3, die von dem Bandpassfilter 1 nicht transmittiert, sondern reflektiert werden, ausgespiegelt, d. h. von dem rücklaufenden Lichtstrahl abgetrennt werden. Der von der Spiegelfläche des Vollspiegels 47 zurücklaufende Lichtstrahl 3 weist nach erneutem Hindurchtreten durch die rotationssymmetrische Linse 46 einen Parallelversatz zu dem einfallenden Lichtstrahl 3 auf, weil eine Rotationsachse 48, zu der die Linse 46 rotationssymmetrisch ausgebildet ist, in einer Nullstellung der Drehspiegel 40 und 41 zu dem einfallenden Lichtstrahl 3 parallelversetzt ist. Aufgrund des resultierenden Parallelversatzes zwischen dem einfallenden und dem rücklaufenden Lichtstrahl 3 kann der rücklaufende Lichtstrahl 3, nachdem er von den Kippspiegeln 40 und 41 entscannt wurde, mit Hilfe eines Kantenspiegels 49 vor der kollimierenden Optik 39 von dem einfallenden Lichtstrahl 3 abgetrennt werden. Eine Zylinderlinse 50 mit zu der Kippachse 43 des zweiten Kippspiegels 41 paralleler Zylinderachse, die nahe dem ausgangsseitigen Brennpunkt der Linse 46 angeordnet ist, verschiebt selektiv die Kippachse 43 des zweiten Kippspiegels 41 in den eingangsseitigen Brennpunkt der Linse 46, an dem die Kippachse 42 des ersten Kippspiegels 40 angeordnet ist. Auf diese Weise kann auch ohne eine Abbildung der Kippspiegel 40 und 41 aufeinander eine Verkippung des Lichtstrahls 3 in zwei zueinander orthogonalen Richtungen ohne eine gleichzeitige Änderung der Strahllage erreicht werden.

### BEZUGSZEICHENLISTE

- 1: Bandpassfilter
- 2: Licht
- 3: Lichtstrahl
- 3': Lichtstrahl
- 4: Ausbreitungsrichtung
- 5: Langpassfilter
- 6: Kurzpassfilter
- 7: Dünnschichtsystem
- 8: Dünnschichtsystem
- 9: Substrat
- 10: Substrat
- 11: Gradientenfilter
- 12: Gradientenfilter
- 13: erste Richtung
- 14: zweite Richtung
- 15: lineare Richtung
- 16: lineare Richtung
- 17: Drehrichtung
- 18: optische Achse
- 19: radiale Richtung
- 20: Transmissionsspektrum
- 20': Transmissionsspektrum
- 21: Auftreffort
- 21': Auftreffort
- 22: obere Grenzwellenlänge
- 22': obere Grenzwellenlänge
- 23: Transmissionsspektrum
- 23': Transmissionsspektrum
- 24: untere Grenzwellenlänge
- 24': untere Grenzwellenlänge
- 25: Gesamttransmissionsspektrum
- 25': Gesamttransmissionsspektrum
- 26: Passband
- 26': Passband
- 27: Sperrbereich
- 28: Grenze
- 29: Vorrichtung
- 30: fokussierende Optik
- 31: zweiachsiger Kippspiegel
- 32: Brennpunkt
- 33: Kipppunkt
- 34: Off-Axis-Parabolspiegel
- 35: Off-Axis-Parabolspiegel
- 36: ortsfester Brennpunkt
- 37: Detektor
- 38: Lichtleiter
- 39: kollimierende Optik
- 40: erster Kippspiegel
- 41: zweiter Kippspiegel
- 42: Kippachse des ersten Kippspiegels
- 43: Kippachse des zweiten Kippspiegels
- 44: Galvomotor
- 45: Galvomotor
- 46: rotationssymmetrische Linse
- 47: Vollspiegel
- 48: Rotationsachse
- 49: Kantenspiegel
- 50: Zylinderlinse

## Patentansprüche

1. Bandpassfilter (1) für Licht (2)
- mit einer variablen unteren Grenzwellenlänge (24), die durch ein flächiges Langpassfilter (5) vorgegeben wird, und
- mit einer variablen oberen Grenzwellenlänge (22), die durch ein flächiges Kurzpassfilter (6) vorgegeben wird,
- wobei das Langpassfilter (5) und das Kurzpassfilter (6) in Reihe geschaltet sind und
- wobei das Langpassfilter (5) und das Kurzpassfilter (6) räumlich fest zueinander angeordnet sind,
**dadurch gekennzeichnet,**
- **dass** das Langpassfilter (5) in verschiedenen Flächenbereichen, die in einer ersten Richtung (13) aufeinanderfolgen, verschiedene untere Grenzwellenlängen (24, 24') aufweist,
- **dass** das Kurzpassfilter (6) in verschiedenen Flächenbereichen, die in einer zweiten Richtung (14) aufeinander folgen, verschiedene obere Grenzwellenlängen (22, 22') aufweist und
- **dass** die erste Richtung (13) und die zweite Richtung (14) quer zueinander ausgerichtet sind.

2. Bandpassfilter (1) nach Anspruch 1, **dadurch gekennzeichnet, dass** das Langpassfilter (5) und das Kurzpassfilter (6) in einem Strahlengang des Lichts (2) in Reihe geschaltet sind, wobei die erste Richtung (13) und die zweite Richtung (14) in einer Projektion längs des Strahlengangs quer zueinander ausgerichtet sind.

3. Bandpassfilter (1) nach Anspruch 2, **dadurch gekennzeichnet, dass** die erste Richtung (13) und die zweite Richtung (14) in der Projektion längs des Strahlengangs
- zueinander orthogonale lineare Richtungen (15, 16) oder
- bezogen auf eine optische Achse (18) des Strahlengangs eine radiale Richtung (19) und eine Umfangsrichtung sind.

4. Bandpassfilter (1) nach einem der vorhergehenden Ansprüche, **dadurch gekennzeichnet,**
- **dass** das Langpassfilter (5) und das Kurzpassfilter (6) miteinander verkittet sind oder
- **dass** ein das Langpassfilter (5) ausbildendes erstes Dünnschichtsystem (7) und ein das Kurzpassfilter (6) ausbildendes zweites Dünnschichtsystem (8) auf einem selben Substrat (9, 10) angeordnet sind oder
- **dass** das Langpassfilter (5) und das Kurzpassfilter (6) auf andere Weise parallel zueinander angeordnet und starr miteinander verbunden sind.

5. Bandpassfilter (1) nach einem der vorhergehenden Ansprüche, **dadurch gekennzeichnet,**
- **dass** die unteren Grenzwellenlängen (22, 22') des Langpassfilters (5) in der ersten Richtung (13) monoton ansteigen und/oder
- **dass** die oberen Grenzwellenlängen (24, 24') des Kurzpassfilters (6) in der zweiten Richtung (14) monoton abfallen.

6. Bandpassfilter (1) nach einem der vorhergehenden Ansprüche, **dadurch gekennzeichnet,**
- **dass** die unteren Grenzwellenlängen (22, 22') des Langpassfilters (5) in der ersten Richtung (13) streng monoton oder linear ansteigen und/oder
- **dass** die oberen Grenzwellenlängen (24, 24') des Kurzpassfilters (6) in der zweiten Richtung (14) streng monoton oder linear abfallen.

7. Bandpassfilter (1) nach Anspruch 6, **dadurch gekennzeichnet, dass** eine erste Steigung der unteren Grenzwellenlängen (22, 22') des Langpassfilters (5) in der ersten Richtung (13) und eine zweite Steigung der oberen Grenzwellenlängen (24, 24') des Kurzpassfilters (6) in der zweiten Richtung (14) einen gleichen konstanten Betrag aufweisen.

8. Bandpassfilter (1) nach einem der vorhergehenden Ansprüche, **dadurch gekennzeichnet, dass** ein von den unteren Grenzwellenlängen (22, 22') des Langpassfilters (5) in der ersten Richtung (13) überspannter erster Wellenlängenbereich und ein von den oberen Grenzwellenlängen (24, 24') des Kurzpassfilters (6) in der zweiten Richtung (14) überspannter zweiter Wellenlängenbereich einander zu mindestens 25 %, 50 % oder 75 % überlappen.

9. Vorrichtung (29) zum Selektieren eines Wellenlängenbereichs aus einem Lichtstrahl (3) mit einem Bandpassfilter (1) nach einem der vorhergehenden Ansprüche, **gekennzeichnet durch** eine Strahlverlagerungseinrichtung, die dazu ausgebildet ist, den Lichtstrahl (3) quer zu seiner Ausbreitungsrichtung (4) gegenüber dem Bandpassfilter (1) zu verlagern, wobei die Vorrichtung (29 optional einen dem Bandpassfilter (1) nachgeschalteten punktförmigen oder flächigen Lichtdetektor aufweist.

10. Vorrichtung (29) nach Anspruch 9, **gekennzeichnet durch** einen weiteren Bandpassfilter (1) nach einem der Ansprüche 1 bis 8 im Strahlengang eines von dem Bandpassfilter (1) reflektierten Anteils des Lichtstrahls (3) mit Wellenlängen außerhalb des von dem Bandpassfilter (1) selektierten Wellenlängenbereichs.

11. Vorrichtung (29) nach einem der Ansprüche 9 und 10, **dadurch gekennzeichnet, dass** die Strahlverlagerungseinrichtung dazu ausgebildet ist, den Lichtstrahl (3) in zwei verschiedenen Richtungen quer zu seiner Ausbreitungsrichtung (4) gegenüber dem Bandpassfilter (1) zu verlagern.

12. Vorrichtung (29) nach Anspruch 11, **dadurch gekennzeichnet,**
- **dass** die Strahlverlagerungseinrichtung
- einen zweiachsigen Kippspiegel (31),
- eine den Lichtstrahl (3) auf den Kippspiegel (31) fokussierende Optik (30),
- einen den von dem Kippspiegel (31) abgelenkten Lichtstrahl (3) kollimierenden Off-Axis-Parabolspiegel (334) und
- einen weiteren, den kollimierten Lichtstrahl (3) auf einen ortsfesten Brennpunkt fokussierenden Off-Axis-Parabolspiegel (35)
aufweist,
- wobei das Bandpassfilter (1) zwischen den beiden Off-Axis-Parabolspiegeln (34, 35) angeordnet ist.

13. Vorrichtung (29) nach Anspruch 11, **dadurch gekennzeichnet,**
- **dass** die Strahlverlagerungseinrichtung
- einen den Lichtstrahl (3) zuführenden Lichtleiter (38),
- eine den aus dem Lichtleiter (38) austretenden Lichtstrahl kollimierende Optik (39),
- einen ersten einachsigen Kippspiegel (40) und einen zweiten einachsigen Kippspiegel (41), die den kollimierten Lichtstrahl (3) aufeinanderfolgend in zwei unterschiedlichen Richtungen (13, 14) ablenken,
- einem Vollspiegel (47) für den abgelenkten Lichtstrahl (3),
- eine den abgelenkten Lichtstrahl (3) senkrecht auf den Vollspiegel (47) fokussierende und eine zu einer Rotationsachse (48) rotationssymmetrische Linse (46) umfassende Linsenkombination und
- einen den von dem Vollspiegel (47) reflektierten Lichtstrahl (3) von dem aus dem Lichtleiter (38) austretenden und mit der kollimierenden Optik (38) kollimierten Lichtstrahl (3) abtrennenden Kantenspiegel (49)
aufweist,
- wobei das Bandpassfilter (1) nahe vor dem Vollspiegel (47) angeordnet und soweit gegenüber dem Vollspiegel (47) verkippt ist, dass ein von dem Bandpassfilter (1) reflektierter Anteil des Lichtstrahls (3) mit Wellenlängen außerhalb des von dem Bandpassfilter (1) selektierten Wellenlängenbereichs von dem Bandpassfilter (1) aus dem weiteren Strahlengang heraus reflektiert wird,
- wobei der von dem Vollspiegel (47) reflektierte Lichtstrahl (3) mit dem selektierten Wellenlängenbereich beim erneuten Durchgang durch die Linsenkombination in rückläufiger Richtung erneut kollimiert und von den Kippspiegeln (40, 41) entscannt wird und
- wobei die Rotationsachse (48) der rotationssymmetrischen Linse (46) gegenüber einer Strahlachse bei Nullauslenkung der Kippspiegel (40, 41) derart parallelversetzt angeordnet ist, dass der von dem Vollspiegel (47) reflektierte Lichtstrahl (3) nach dem Durchtritt durch die Linsenkombination gegenüber dem einfallenden Lichtstrahl (3) soweit lateral verschoben ist, dass er mit dem Kantenspiegel (49) von dem aus dem Lichtleiter (38) austretenden und mit der kollimierenden Optik (39) kollimierten Lichtstrahl (3) abtrennbar ist.

14. Vorrichtung (29) nach Anspruch 13, **dadurch gekennzeichnet, dass** die beiden unterschiedlichen Richtungen (13, 14), in denen die beiden Kippspiegel (40, 41) ablenken, zueinander orthogonal sind und dass die Linsenkombination weiterhin eine Zylinderlinse (50) umfasst, deren Zylinderachse parallel zur Kippachse (43) des zweiten Kippspiegels (41) verläuft und die derart nahe dem Vollspiegel (47) angeordnet ist, dass die Zylinderlinse (50) die Kippachse (43) des zweiten Kippspiegels (41) in den eingangsseitigen Brennpunkt der rotationssymmetrischen Linse (46) verschiebt, durch den auch die Kippachse (42) des ersten Kippspiegels (40) verläuft.

15. Laser-Scanning-Mikroskop mit mindestens einer Vorrichtung (29) nach einem der Ansprüche 9 bis 14 im Anregungs- und/oder Detektionsstrahlengang.

## Claims

1. Bandpass filter (1) for light (2)
- comprising a variable lower cut-off wavelength (24) which is defined by a two-dimensional long-pass filter (5), and
- comprising a variable upper cut-off wavelength (22) which is defined by a two-dimensional short-pass filter (6),
- wherein the long-pass filter (5) and the short-pass filter (6) are connected in series, and
- wherein the long-pass filter (5) and the short-pass filter (6) are spatially fixed relative to one another, and
**characterized in**
- **that** the long-pass filter (5) has different lower cut-off wavelengths (24, 24') in different area regions which follow to one another in a first direction (13),
- **that** the short-pass filter (6) has different upper cut-off wavelengths (22, 22') in different area regions which follow to one another in a second direction (14),
- **that** the first direction (13) and the second direction (14) are oriented crosswise to one another.

2. Bandpass filter (1) of claim 1, **characterized in that** the long-pass filter (5) and the short-pass filter (6) are connected in series in a beam path of the light (2), wherein the first direction (13) and the second direction (14) are oriented crosswise with regard to one another in a projection along the beam path.

3. Bandpass filter (1) of claim 2, **characterized in that** the first direction (13) and the second direction (14), in the projection along the beam path, are
- linear directions (15, 16) which are orthogonal to one another, or
- a radial direction (19) and a circumferential direction with regard to an optical axis (13) of the beam path.

4. Bandpass filter (1) of any of the preceding claims, **characterized in**
- **that** the long-pass filter (5) and the short-pass filter (6) are cemented to one another, or
- **that** a first thin film system (7) forming the long-pass filter (5) and a second thin film system (8) forming the short-pass filter (6) are arranged on a same substrate (9, 10), or
- **that** the long-pass filter (5) and the short-pass filter (6) are in another way arranged parallel to one another and rigidly connected to one another.

5. Bandpass filter (1) of any of the preceding claims, **characterized in**
- **that** the lower cut-off wavelengths (22, 22') of the long-pass filter (5) monotonically increase in the first direction (13) and/or
- **that** the upper cut-off wavelengths (24, 24') of the short-pass filter (6) monotonically decrease in the second direction (14).

6. Bandpass filter (1) of any of the preceding claims, **characterized in**
- **that** the lower cut-off wavelengths (22, 22') of the long-path filter (5) strictly monotonically or linearly increase in the first direction (13) and/or
- **that** the upper cut-off wavelengths (24, 24') of the short-pass filter (6) strictly monotonically or linearly decrease in the second direction (14).

7. Bandpass filter (1) of claim 6, **characterized in that** a first gradient of the upper cut-off wavelengths (22, 22') of the long-pass filter (5) in the first direction (13) and a second gradient of the upper cut-off wavelengths (24, 24') of the short-pass filter (6) in the second direction (14) have a same constant value.

8. Bandpass filter (1) of any of the preceding claims, **characterized in that** a first wavelength range spanned by the lower cut-off wavelengths (22, 22') of the long-pass filter (5) in the first direction (13) and a second wavelength range spanned by the upper cut-off wavelengths (24, 24') of the short-pass filter (6) in the second direction (14) overlap one another by at least 25 %, 50 %, or 75 %.

9. Apparatus (29) for selecting a wavelength range from a light beam (3) comprising a bandpass filter (1) of any of the preceding claims, **characterized by** a beam shifting device which is configured to shift the light beam (3), crosswisely with regard to its propagation direction (4), relative to the bandpass filter (1), wherein the apparatus (29) optionally comprises a point-shaped or two-dimensional light detector arranged downstream of the bandpass filter (1).

10. Apparatus (29) of claim 9, **characterized by** a further bandpass filter (1) of any of the claims 1 to 8 in a beam path of a component of the light beam (3) that is reflected by the bandpass filter (1) and that has wavelengths outside the wavelength range selected by the bandpass filter (1).

11. Apparatus (29) of any of the claims 9 and 10, **characterized in that** the beam shifting device is configured to shift the light beam (3) in two different directions crosswisely with regard to its propagation direction (4) relative to the bandpass filter (1).

12. Apparatus (29) of claim 11, **characterized in**
- **that** the beam shifting device comprises
- a two-axes tilting mirror (31),
- an optic (30) focusing the light beam (3) onto the tilting mirror (31),
- an off-axis parabolic mirror (34) collimating the light beam (3) deflected by the tilting mirror (31), and
- a further off-axis parabolic mirror (35) focusing the collimated light beam (3) onto a spatially fixed focal point,
- wherein the bandpass filter (1) is arranged between the two off-axis parabolic mirrors (34, 35).

13. Apparatus (29) of claim 11, **characterized in**
- **that** the beam shifting device comprises
- a light guide (38) supplying the light beam (3),
- an optic (39) collimating the light beam emerging from the light guide (38),
- a first one-axis tilting mirror (40) and a second one-axis tilting mirror (41) which deflect the collimated light beam (3) one after the other into two different directions (13, 14),
- a full mirror (47) for the deflected light beam (3),
- a lens combination focusing the deflected light beam (3) perpendicularly onto the full mirror (47) and including a lens (46) which is rotationally symmetric with regard to a rotation axis (58), and
- an edge mirror (49) separating the light beam (3) reflected by the full mirror (47) from the light beam (3) emerging from the light guide (38) and collimated by the collimating optic (39),
- wherein the bandpass filter (1) is arranged closely in front of the full mirror (47) and tilted to such an extent with regard to the full mirror (47) that a component of the light beam (3) reflected by the bandpass filter (1) and having wavelengths outside the wavelength range selected by the bandpass filter (1) is reflected by the bandpass filter (1) out of the continued beam path,
- wherein the light beam (3) which has the selected wavelength range and which is reflected by the full mirror (47) is once again collimated and de-scanned by the tilting mirrors (40, 41) when passing once again through the lens combination in opposite direction, and
- wherein, at zero excursion of the tilting mirrors (40, 41), the rotation axis (48) of the rotationally symmetric lens (46) is arranged relative to a beam axis at such a parallel offset that the light beam (3) reflected by the full mirror (47), after passing through the lens combination, is laterally shifted with regard to the incident light beam (3) to such an extent that it is separable from the light beam (3), which emerges out of the light guide (38) and which is collimated by the collimating optic (39), by means of the edge mirror (49).

14. Apparatus (29) of claim 13, **characterized in that** the two different directions (13, 14), in which the two tilting mirrors (40, 41) deflect, are orthogonal to each other, and that the lens combination further includes a cylinder lens (50), whose cylinder axis is parallel to the tilting axis (43) of the second tilting mirror (41), and which is arranged close to the full mirror (47) in such a way that the cylinder lens (50) shifts the tilting axis (43) of the second tilting mirror (41) into the input side focal point of the rotationally symmetric lens (46) through which the tilting axis (42) of the first tilting mirror (40) also runs through.

15. Laser-scanning microscope comprising at least one apparatus (29) of any of the claims 9 to 14 in its excitation and/or detection beam path.

## Revendications

1. Filtre passe-bande (1) pour de la lumière (2)
- avec une longueur d'onde limite inférieure variable (24) qui est prédéterminée par un filtre passe-haut plat (5) et
- avec une longueur d'onde limite supérieure variable (22) qui est prédéterminée par un filtre passe-bas plat (6)
- dans lequel le filtre passe-haut (5) et le filtre passe-bas (6) sont branchés en série et
- dans lequel le filtre passe-haut (5) et le filtre passe-bas (6) sont disposés dans l'espace de manière fixe l'un par rapport à l'autre,
**caractérisé en ce que**
- le filtre passe-haut (5) présente, dans différentes zones de la surface, qui se succèdent dans une première direction (13), différentes longueurs d'ondes limites inférieures (24, 24'),
- le filtre passe-bas (6) présente, dans différentes zones de la surface, qui se succèdent dans une deuxième direction (14), différentes longueurs d'ondes limites supérieures (22, 22') et
- la première direction (13) et la deuxième direction (14) sont orientées transversalement l'une par rapport à l'autre.

2. Filtre passe-bande (1) selon la revendication 1, **caractérisé en ce que** le filtre passe-haut (5) et le filtre passe-bas (6) sont branchés en série dans un trajet de faisceau de la lumière (2), dans lequel la première direction (13) et la deuxième direction (14) sont orientées de manière transversale l'une par rapport à l'autre dans une projection le long du trajet de faisceau.

3. Filtre passe-bande (1) selon la revendication 2, **caractérisé en ce que** la première direction (13) et la deuxième direction (14) sont, dans la projection le long du trajet de faisceau,
- des directions linéaires (15, 16) orthogonales entre elles ou
- par rapport à un axe optique (18) du trajet de faisceau, une direction radiale (19) et une direction circonférentielle.

4. Filtre passe-bande (1) selon l'une des revendications précédentes, **caractérisé en ce que**
- le filtre passe-haut (5) et le filtre passe-bas (6) sont collés entre eux ou
- un premier système à couche mince (7) constituant le filtre passe-haut (5) et un deuxième système à couche mince (8) constituant le filtre passe-bas (6) sont disposés sur un même substrat (9, 10) ou
- le filtre passe-haut (5) et le filtre passe-bas (6) sont disposés, d'une autre manière, parallèlement entre eux et sont reliés de manière rigide entre eux.

5. Filtre passe-bande (1) selon l'une des revendications précédentes, **caractérisé en ce que**
- les longueurs d'ondes limites inférieures (22, 22') du filtre passe-haut (5) augmentent de manière monotone dans la première direction (13) et/ou
- les longueurs d'ondes limites supérieures (24, 24') du filtre passe-bas (6) diminuent de manière monotone dans la deuxième direction (14).

6. Filtre passe-bande (1) selon l'une des revendications précédentes, **caractérisé en ce que**
- les longueurs d'ondes limites inférieures (22, 22') du filtre passe-haut (5) augmentent de manière strictement monotone ou linéaire dans la première direction (13) et/ou
- les longueurs d'ondes limites supérieures (24, 24') du filtre passe-bas (6) diminuent de manière strictement monotone ou linéaire dans la deuxième direction (14).

7. Filtre passe-bande (1) selon la revendication 6, **caractérisé en ce qu'**une première pente des longueurs d'ondes limites inférieures (22, 22') du filtre passe-haut (5) dans la première direction (13) et une deuxième pente des longueurs d'ondes limites supérieures (24, 24') du filtre passe-bas (6) dans la deuxième direction (14) présentent une valeur égale et constante.

8. Filtre passe-bande (1) selon l'une des revendications précédentes, **caractérisé en ce qu'**une première plage de longueurs d'ondes s'étendant sur les longueurs d'ondes limites inférieures (22, 22') du filtre passe-haut (5) dans la première direction (13) et une deuxième plage de longueurs d'ondes s'étendant sur les longueurs d'ondes limites supérieures (24, 24') du filtre passe-bas (6) dans la deuxième direction (14) se superposent à hauteur d'au moins 25 %, 50 % ou 75 %.

9. Dispositif (29) pour la sélection d'une plage de longueurs d'ondes à partir d'un faisceau lumineux (3) avec un filtre passe-bande (1) selon l'une des revendications précédentes, **caractérisé par** un dispositif de décalage de faisceau qui est conçu pour décaler le faisceau lumineux (3) transversalement à sa direction de propagation (4) par rapport au filtre passe-bande (1), dans lequel le dispositif (29) comprend, en option, un détecteur de lumière ponctuel ou plat branché en aval du filtre passe-bande (1).

10. Dispositif (29) selon la revendication 9, **caractérisé par** un autre filtre passe-bande (1) selon l'une des revendications 1 à 8 dans le trajet de faisceau d'une part du faisceau lumineux (3) réfléchie par le filtre passe-bande (1), avec des longueurs d'ondes hors de la plage de longueurs d'ondes sélectionnée par le filtre passe-bande (1).

11. Dispositif (29) selon l'une des revendications 9 et 10, **caractérisé en ce que** le dispositif de décalage de faisceau est conçu pour décaler le faisceau lumineux (3) dans deux directions différentes transversalement à sa direction de propagation (4) par rapport au filtre passe-bande (1).

12. Dispositif (29) selon la revendication 11, **caractérisé en ce que**
- le dispositif de décalage de faisceaux comprend
- un miroir basculant à deux axes (31),
- une optique (30) focalisant le faisceau lumineux (3) sur le miroir basculant (31),
- un miroir parabolique hors axe (334) collimatant le faisceau lumineux (3) dévié par le miroir basculant (31) et
- un autre miroir parabolique hors axe (35) focalisant le faisceau lumineux (3) collimaté sur un foyer fixe
- dans lequel le filtre passe-bande (1) est disposé entre les deux miroirs paraboliques hors axe (34, 35).

13. Dispositif (29) selon la revendication 11, **caractérisé en ce que**
- le dispositif de décalage de faisceaux comprend
- une fibre optique (38) introduisant le faisceau lumineux (3),
- une optique (39) collimatant le faisceau lumineux sortant de la fibre optique (38),
- un premier miroir basculant monoaxial (40) et un deuxième miroir basculant monoaxial (41), qui dévient le faisceau lumineux (3) collimaté successivement dans deux directions différentes (13, 14),
- un miroir plein (47) pour le faisceau lumineux (3) dévié,
- une combinaison de lentilles focalisant le faisceau lumineux (3) perpendiculairement sur le miroir plein (47) et comprenant une lentille (46) symétrique en rotation par rapport à un axe de rotation (48) et
- un miroir de bord (49) séparant le faisceau lumineux (3) réfléchi par le miroir plein (47) du faisceau lumineux (3) sortant de la fibre optique (38) et collimaté avec l'optique de collimation (38)
- dans lequel le filtre passe-bande (1) est disposé près et en avant du miroir plein (47) et est basculé par rapport au miroir plein (47) jusqu'à ce qu'une part du faisceau lumineux (3) réfléchie par le filtre passe-bande (1), avec des longueurs d'ondes hors de la plage de longueurs d'ondes sélectionnée par le filtre passe-bande (1) soit réfléchie par le filtre passe-bande (1) de l'autre trajet de faisceau,
- dans lequel le faisceau lumineux (3) réfléchi par le miroir plein (47), avec la plage de longueurs d'ondes sélectionnée, est à nouveau collimaté lors d'un nouveau passage, par la combinaison de lentilles dans la direction de retour et est éliminé par les miroirs basculants (40, 41) et
- dans lequel l'axe de rotation (48) de la lentille à symétrie de rotation (46) est disposé de manière décalée parallèlement par rapport à un axe de faisceau lors d'une déviation nulle des miroirs basculants (40, 41), de sorte que le faisceau lumineux (3) réfléchi par le miroir plein (47) soit décalé latéralement, après la traversée de la combinaison de lentilles, par rapport au faisceau lumineux (3) incident, jusqu'à ce qu'il puisse être séparé avec le miroir de bord (49), du faisceau lumineux (3) sortant de la fibre optique (38) et collimaté avec l'optique de collimation (39).

14. Dispositif (29) selon la revendication 13, **caractérisé en ce que** les deux directions différentes (13, 14) dans lesquelles les deux miroirs basculants (40, 41) dévient, sont orthogonales entre elles et **en ce que** la combinaison de lentilles comprend en outre une lentille cylindrique (50) dont l'axe de cylindre s'étend parallèlement à l'axe de basculement (43) du deuxième miroir basculant (41) et qui est disposée près du miroir plein (47) de façon à ce que la lentille cylindrique (50) décale l'axe de basculement (43) du deuxième miroir basculant (41) vers le foyer du côté de l'entrée de la lentille à symétrie de rotation (46), à travers lequel s'étend également l'axe de basculement (42) du premier miroir basculant (40).

15. Microscope à balayage laser avec au moins un dispositif (29) selon l'une des revendications 9 à 14 dans le trajet de faisceau d'excitation et/ou de détection.
